# EUROPÄISCHE PATENTANMELDUNG

(11) **EP 2 292 526 A1**
(43) Veröffentlichungstag der Anmeldung: **09.03.2011**
(21) Anmeldenummer: 10170333.8
(22) Anmeldetag: 21.07.2010
(51) Int. Cl.: B65D 65/16, B65D 65/38

(54) **Transparente Spitztüte, vorzugsweise mit PLA**

(30) Priorität: 22.07.2009 DE 102009034210
(71) Anmelder: Huhtamaki Ronsberg ZN der Huhtamaki Deutschland GmbH & Co. KG, 87671 Ronsberg/Allgäu (DE)
(72) Erfinder: Strack, Agnes, 87643 Obergünzburg (DE); Walthers, Nils Thomas, 87435 Kempten (DE); Klaus, Thomas, 87787 Wolfertschwenden (DE)
(74) Vertreter: Trossin, Hans-Jürgen

(57) **Zusammenfassung**

Die Erfindung betrifft eine Verpackung, insbesondere eine Lebensmittel-Verpackung, bevorzugt für Lebensmittel wie etwa Speiseeis in Waffeln und dergleichen. Die Verpackung (10) umfasst einen Deckelabschnitt (14) und einen Verpackungskörper (12), wobei der Verpackungskörper (12) konisch, insbesondere spitzkonisch, ausgebildet ist, und wobei der Deckelabschnitt (14) in einem geschlossenem Zustand an dem Verpackungskörper (12) gehalten ist.

## Beschreibung

Die vorliegende Erfindung betrifft eine Verpackung, insbesondere eine Lebensmittel-Verpackung, bevorzugt für Lebensmittel wie etwa Speiseeis in Waffeln und dergleichen, umfassend einen Deckelabschnitt und einen Verpackungskörper, wobei der Verpackungskörper konisch, insbesondere spitzkonisch ausgebildet ist und wobei der Deckelabschnitt in einem geschlossenen Zustand der Verpackung an dem Verpackungskörper gehalten ist.

Gattungsgemäße Verpackungen sind von herkömmlichen, im Handel erhältlichen Verpackungen von Eistüten bekannt. Derartige Verpackungen sind in der Regel aus mit Aluminium beschichtetem Papier hergestellt, welches beispielsweise mit Informationen, wie etwa der Bezeichnung des Herstellers sowie der enthaltenden Eissorte und dergleichen, bedruckt sein kann.

Nachteilig an der bekannten Verpackung ist, dass diese aus einem blickdichten Material besteht, so dass der Betrachter den in der Verpackung befindlichen Inhalt ohne ein in der Regel zerstörendes Öffnen der Verpackung nicht sehen kann. Zudem ist das Öffnen der Verpackung selbst im Falle einer Wiederverschließbarkeit der Verpackung, insbesondere bei Lebensmitteln, aus hygienischen Gründen problematisch.

Ausgehend von den Nachteilen der Verpackungen gemäß dem oben bezeichneten Stand der Technik ist es Aufgabe der vorliegenden Erfindung, ein Erkennen von zumindest Abschnitten des Verpackungsgutes ohne Beeinträchtigung, insbesondere ohne Öffnen der Verpackung, zu ermöglichen.

Diese Aufgabe wird erfindungsgemäß dadurch gelöst, dass der Verpackungskörper wenigstens abschnittsweise transparent ausgebildet ist.

Dies ermöglicht es einem Verbraucher, den Inhalt der Verpackung von außen ohne Verformung, Zerstörung oder sonstige unerwünschte Manipulation der Verpackung zu erkennen. Insbesondere wird es dem Verbraucher mittels der erfindungsgemäßen Verpackung bei entsprechender Anordnung des transparenten Abschnitts möglich, auch einen vom üblichen Öffnungsbereich der Verpackung fern liegenden Abschnitt des Innenraums ohne weitere Maßnahmen zu betrachten. Die erfindungsgemäße Verpackung bietet sich daher insbesondere dann an, wenn in unterschiedlichen Bereichen der Verpackung unterschiedliche Inhalte angeordnet sind.

Zum Erkennen des vollständigen Verpackungsinhaltes ist vorzugsweise der Verpackungskörper vollständig transparent ausgebildet.

Unter dem Begriff "transparent" ist eine Durchlässigkeit des jeweiligen Materials, idealerweise in einem Bereich von wenigstens 50%, vorzugsweise wenigstens 70%, besonders bevorzugt wenigstens 80%, für elektromagnetische Strahlung im Wellenlängen-Bereich von sichtbarem Licht von wenigstens einer Farbe zu verstehen, und zwar derart, dass man in Blickrichtung hinter dem Material befindliche Objekte im Wesentlichen klar erkennen kann. Dies bedeutet, dass die Intensität der betreffenden elektromagnetischen Strahlung nach dem Durchgang durch das Material wenigstens 50%, vorzugsweise wenigstens 70%, besonders bevorzugt wenigstens 80%, der Intensität der Lichtstrahlung vor dem Durchgang durch das Material beträgt.

Zur Verringerung der zur Bildung der erfindungsgemäßen Verpackung benötigten Komponenten kann vorgesehen sein, dass der Deckelabschnitt mit dem Verpackungskörper integral ausgebildet ist. In diesem Fall bietet es sich insbesondere an, dass der einstückig mit dem Verpackungskörper ausgebildete Deckelabschnitt im geöffneten Zustand der Verpackung den sich üblicherweise längs einer Verpackungsachse erstreckenden Verpackungskörper, verglichen mit einem geschlossenen Verpackungszustand, axial verlängert und zum Verschließen der Verpackung radial nach Innen zur Verpackungsachse hin gefaltet wird.

Weiterhin kann vorgesehen sein, dass der Deckelabschnitt gesondert von dem Verpackungskörper ausgebildet ist. Auf diese Weise kann der Deckelabschnitt nach dem Entfernen von dem Verpackungskörper entsorgt werden, was den Zugang zu dem Inhalt der Verpackung, im Falle von Lebensmitteln insbesondere den Verzehr derselben, erleichtert.

Des weiteren kann daran gedacht sein, dass der Deckelabschnitt im geschlossenen Zustand der Verpackung formschlüssig mit dem Verpackungskörper verbunden ist. Auf diese Weise kann die Verpackung ohne zusätzliche Komponenten einfach verschlossen werden. Gemäß der bereits angedeuteten bevorzugten Ausführungsform kann ein Randabschnitt am Endbereich des konischen Verpackungskörpers mit größerem Verpackungsquerschnitt durch Umfalzen radial nach Innen zur Verpackungsachse hin den Deckelabschnitt zumindest abschnittsweise formschlüssig hintergreifen.

Vorteihafterweise umfasst der Verpackungskörper für seine Bereitstellung mit möglichst geringem Gewicht eine transparente Folie aus einem ersten Kunststoff-Material. Zum erleichterten Verschließen der Verpackung, etwa durch Siegeln, kann das erste Kunststoff-Material ein Thermoplast sein. Die Verwendung einer Kunststoff-Folie vereinfacht den Aufwand bei der Herstellung des Verpackungsmaterials, da konische Verpackungskörper besonders einfach aus entsprechend geformten Folienflecken gewickelt werden können.

In einer Ausführungsform ist das erste Kunststoff-Material ein Polyester, insbesondere Polymilchsäure (PLA). Bei Polymilchsäure (PLA) handelt es sich um ein biologisch abbaubares Material, so dass durch Verwendung eines solchen umweltfreundlichen Materials die Umweltverträglichkeit der Verpackung verbessert werden kann. Darüber hinaus ist Polymilchsäure (PLA) thermoplastisch und besitzt gute thermische Siegeleigenschaften, ist insbesondere gut mit sich selbst siegelbar. Des weiteren weist Polymilchsäure (PLA) geringe Rückstellkräfte, insbesondere beim Umfalzen auf, was eine stabile und formschlüssige Verbindung des Deckelabschnitts mit dem Verpackungskörper erleichtert.

In einer alternativen Ausführungsform ist das erste Kunststoff-Material ein Polyether, insbesondere Zellulose-Hydrat (Zellglas). Zellulose-Hydrat eignet sich als Verpackungsmaterial, da es aufgrund seiner Formeigenschaften nur geringe Rückstellkräfte nach einer Verformung aufweist. Durch Verwendung eines Zellulose-Hydrats wird ferner sichergestellt, dass Flüssigkeiten weder in die Verpackung eindringen noch aus dieser austreten können, während hingegen Wasserdampf durch das Zellulose-Hydrat hindurchtreten kann. Dies verhindert die Ausbildung von Kondenswasser innerhalb der Verpackung. Des weiteren ermöglicht die Verwendung von Zellulose-Hydrat, ebenso wie PLA, die Beschichtung mit weiteren Barriereschichten, wenn eine Verringerung der Durchlässigkeit von Gasen, wie etwa Sauerstoff oder Wasserdampf, erzielt werden soll.

Grundsätzlich kann gemäß einer besonders kostengünstigen Ausführungsform der Verpackungskörper im Wesentlichen aus einer lediglich einschichtigen transparenten Folie gebildet sein. Diese umfasst dann nur den ersten Kunststoff. Mit anderen Worten umfasst der Verpackungskörper dann bevorzugt eine einschichtige PLA-Folie oder Zellulose-Hydratfolie. Diese weist vorzugsweise eine Dicke von 30 µm bis 100 µm auf.

Des weiteren bietet es sich an, dass die transparente Folie eine Trägerschicht für wenigstens eine weitere Schicht, insbesondere für wenigstens eine weitere Folie, bildet. Auf diese Weise wird es möglich, verschiedene Materialien mit verschiedenen Materialeigenschaften hinsichtlich Transparenz, mechanischer Stabilität, Siegeleigenschaften und dergleichen in Abhängigkeit von den jeweiligen Anwendungsanforderungen an die Verpackung in Kombination einzusetzen und so zu einem Schichtverbund mit gewünschten Verbundeigenschaften zu gelangen.

Unter dem Begriff "Trägerschicht" ist dabei eine Basisschicht zu verstehen, auf die im Zuge der Herstellung einer Mehrschicht-Struktur während des Herstellungsprozesses wenigstens eine weitere Schicht oder eine Folge von Schichten aufgebracht wird.

Vorteilhafterweise sind die Trägerschicht und die wenigstens eine weitere Schicht zu einer Mehrschicht-Struktur laminiert. Auf diese Weise kann eine Mehrschicht-Struktur mit definierten Eigenschaften durch Verwendung verschiedener Einzel-Schichten mit gegebenenfalls unterschiedlichen Materialeigenschaften gleichsam konstruiert und realisiert werden. Dies verbessert die Flexibilität bei der Herstellung eines für einen bestimmten Verpackungsinhalt besonders geeigneten Verpackungskörpers hinsichtlich der geforderten Materialeigenschaften wie etwa Reißfestigkeit, Verformungswiderstand, thermische Beständigkeit, Bedruckbarkeit, Reißeigenschaften, Verbindbarkeit mit sich selbst oder/und anderen Werkstoffen, spezifisches Gewicht und dergleichen.

In einer Ausführungsform umfasst die Mehrschicht-Struktur als wenigstens eine weitere Schicht wenigstens eines der folgenden Materialien:
■ Polyester, insbesondere Polymilchsäure (PLA) oder/und Polyethylenterephtalat (PET),
■ Polypropylen, insbesondere biaxial orientiertes Polypropylen (BOPP),
■ Polyvinylidenchlorid (PVDC),
■ Polyethylen (PE),
■ Cyclo-Olefin-Copolymere (COC),
■orientiertes Polyamid (OPA).

Zur besseren Abschirmung des Verpackungsinhalts vor äußeren Einflüssen, was bei verpackten Lebensmitteln insbesondere deren Haltbarkeit erhöht, umfasst die Mehrschicht-Struktur als wenigstens eine weitere Schicht eine Barriereschicht, welche besonders bevorzugt ein Metall-Oxid, wie etwa Al_{X}O_{Y,} insbesondere Al₂O₃, oder/und etwa Si_{X}O_{Y}, insbesondere SiO₂, oder/und ein Oxid eines Metalls der zweiten Hauptgruppe des Periodensystems, oder/und Ethylen-Vinylalkohol (EVOH) oder/und Polyvinylalkohol (PVOH) umfassen kann.

Dabei ist es vorstellbar, dass die weitere Schicht, etwa eine der genannten Kunststoff-Schichten, zunächst mit einem Metall-Oxid beschichtet, insbesondere bedampft wird, und anschließend mit der Trägerschicht und gegebenenfalls weiteren Schichten zu einer Mehrschicht-Struktur laminiert wird. Alternativ kann zunächst die Laminierung und anschließend die Beschichtung mit einem Metall-Oxid erfolgen. Bei Herstellung einer Mehrschicht-Struktur mit mehr als zwei Schichten sind auch Kombinationen aus beiden Vorgehensweisen denkbar.

Um die Dicke der Barriereschicht und damit ihre Eigenschaften hinsichtlich optischer Transparenz einerseits und ihre Eigenschaften als Gasbarriere andererseits sehr genau einstellen zu können, ist ferner daran gedacht, dass die Barriereschicht auf eine der Schichten der Mehrschicht-Struktur aufgedampft ist.

Grundsätzlich kann zwischen unmittelbar benachbarten Schichten der Mehrschicht-Struktur eine dünne und daher im Weiteren vernachlässigte Haftvermittlerschicht vorgesehen sein.

Vorzugsweise umfasst die Mehrschicht-Struktur an ihren beiden außen liegenden Seiten je eine transparente Außenfolie aus Polymilchsäure (PLA) oder/und aus Polyether, insbesondere Zellulose-Hydrat. Dabei kommen jedoch grundsätzlich als Materialien auch Polypropylen, insbesondere biaxial orientiertes Polypropylen (BOPP), oder/und Polyvinyidenlchlorid (PVDC) oder/und Polyethylen (PE) oder/und Cyclo-Olefin-Copolymere (COC) oder/und orientiertes Polyamid (OPA) in Frage. Durch einen bezüglich der verwendeten Werkstoffe oder/und der verwendeten Foliendicken im Wesentlichen identischen Aufbau der Außenfolien der Mehrschicht-Struktur wird der Herstellungsprozess des Verpackungskörpers weiter vereinfacht, da es bei im Wesentlichen identischen Außenfolien bei der weiteren Verarbeitung der Mehrschicht-Struktur nicht oder nur unwesentlich auf deren Orientierung ankommt.

So kann der Verpackungskörper, gegebenenfalls auch der Deckelabschnitt, beispielsweise aus einem zweischichtigen Laminat, etwa aus auschließlich PLA, gebildet sein. Ein PLA-PLA-Laminat, insbesondere mit einer zwischenangeordneten Haftvermittlerschicht, weist gegenüber einer gleich dicken einschichtigen PLA-Folie eine erhöhte Steifigkeit auf.

Darüber hinaus haben sich dreischichtige Laminate, etwa mit dem Aufbau PLA-PE-PLA, PLA-COC-PLA oder PLA-OPA-PLA als vorteilhaft erwiesen, weshalb ein Verpackungskörper, gegebenenfalls auch ein Deckelabschnitt, aus einem dreischichtigen Laminat, insbesondere aus einer der genannten Werkstoffkombinationen als vorteilhafte Weiterbildung der vorliegenden Erfindung angesehen werden.

Zum Schutz des Packungsinhalts vor Sonneneinstrahlung kann darüber hinaus ein zum Verpackungskörper oder/und zum Deckelabschnitt beitragender Kunststoff mit einem UV-Schutz versehen sein, etwa durch Beimischung von Additiven, wie beispielsweise Benzotriazole, in die jeweilige Kunststoffmasse. Derartige Additive sind beispielsweise von CIBA ® unter dem Handelsnamen "Tinuvin" ® erhältlich.

So kann das PLA oder etwa das Zellulose-Hydrat oder/und wenigstens eine weitere Schicht einer gegebenenfalls verwendeten Mehrschicht-Struktur mit einem derartigen UV-Schutz versehen sein.

Bevorzugt umfasst die Trägerschicht einen in eine Vorzugsrichtung gereckten Kunststoff, etwa das zuvor genannte PLA. Alternativ oder in Kombination kann auch vorgesehen sein, dass wenigstens eine weitere Schicht einen in eine Vorzugsrichtung gereckten Kunststoff umfasst. Durch die Verwendung eines gereckten Kunststoffs als Trägerschicht oder/und als wenigstens eine weitere Schicht kann der Aufreißvorgang des Verpackungskörpers, insbesondere hinsichtlich des Rißverlaufs, gezielt derart beeinflusst werden, dass das Aufreißen des Verpackungskörpers entlang der Vorzugsrichtung erfolgt.

Um das Aufreißverhalten einer Mehrschicht-Struktur mit sowohl der Trägerschicht als auch wenigstens einer weiteren Schicht aus gerecktem Kunststoff zu optimieren und ein gezieltes Aufreißen des Verpackungskörpers, insbesondere hinsichtlich des Rißverlaufs, auch in einer Mehrschicht-Struktur sicherzustellen, sind die gereckte Trägerschicht und die wenigstens eine weitere gereckte Schicht in der Mehrschicht-Struktur vorzugsweise derart angeordnet, dass ihre Vorzugsrichtungen im Wesentlichen gleichgerichtet sind.

Zur Erzielung eines möglichst dichten Verpackungskörpers, der durch Wickeln eines einfach ebenen Folienstückes gebildet sein kann, wird weiter vorgeschlagen, dass die Randlinie des radial äußeren Anfangsrandbereichs der Mantelfläche des konischen Verpackungskörpers zumindest abschnittsweise wendelförmig verläuft.

Zur Sicherstellung eines geringen Verpackungsgewichts bei gleichzeitig guter Abschirmung kann die Trägerschicht, vorzugsweise die beiden transparenten Außenfolien jeweils, eine Dicke von 6 Mikrometern bis 40 Mikrometern aufweisen.

Aus demselben Grund weisen die zwischen den beiden Außenfolien gelegenen weiteren Schichten der Mehrschicht-Struktur bevorzugt zusammen eine Dicke von 3 Mikrometern bis 53 Mikrometern, besonders bevorzugt von 6 Mikrometern bis 40 Mikrometern, auf.

Um es einem Verbraucher weiter zu erleichtern, den Inhalt der Verpackung von außen ohne Verformung, Zerstörung oder sonstige unerwünschte Manipulation der Verpackung zu erkennen, wird vorgeschlagen, dass auch der Deckelabschnitt wenigstens abschnittsweise, vorzugsweise vollständig aus transparentem Kunststoff, insbesondere unter Beteiligung von Polymilchsäure (PLA) oder/und Zellulose-Hydrat, ausgebildet ist, gegebenenfalls in Form einer Mehrschicht-Struktur, wie sie oben genannt ist.

Die vorliegende Erfindung wird nachfolgend anhand eines Ausführungsbeispiels in den beiliegenden Zeichnungen erläutert. Es stellt dar:
- Figur 1: Eine Ausführungsform der erfindungsgemäßen Verpackung in einer perspektivischen Ansicht
- Figur 2: Die Ausführungsform gemäß Figur 1 in einer Schnittansicht
- Figur 3: Den schichtweisen Aufbau der Mehrschicht-Struktur des Verpackungskörpers der Ausführungsform gemäß Figur 1

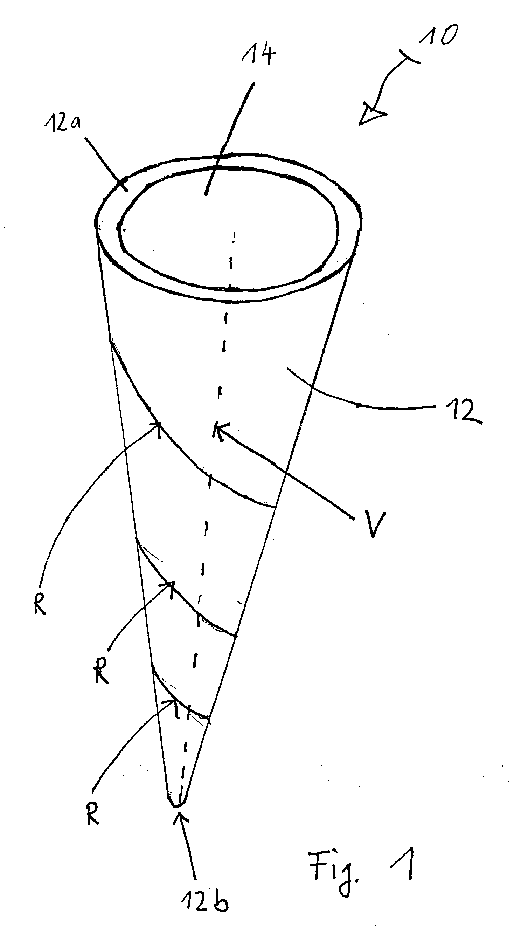

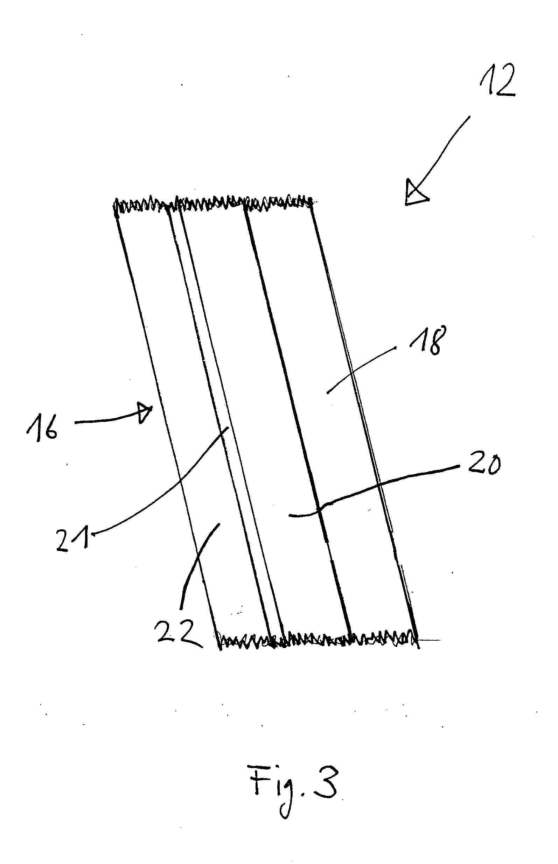

In Figur 1 ist eine erfindungsgemäße Verpackung mit 10 bezeichnet. Der spitzkonische Verpackungskörper 12 ist transparent ausgebildet, verläuft entlang einer Verpackungsachse V und verjüngt sich von einem Entnahmeende 12a mit großem Verpackungsquerschnitt zu einer Spitze 12b an dem dem Entnahmeende 12a bezüglich der Verpackungsachse V axial entgegengesetzten Längsende des Verpackungskörpers 12. Vorteilhafterweise ist der vom Verpackungskörper 12 gesondert ausgebildete Deckelabschnitt 14 an dem Entnahmeende 12a des Verpackungskörpers 12 gehalten. Dazu kann das Entnahmeende 12a des Verpackungskörpers derart radial nach innen umgefalzt sein, dass es den Deckelabschnitt 14 in Richtung der Verpackungsachse V hintergreift. Die Randlinie R des radial äußeren Randbereichs der Mantelfläche des Verpackungskörpers 12 ist zur Bereitstellung eines möglichst flüssigkeitsdichten Verpackungskörpers 12 aus einem ebenen Folienstück bevorzugt wendelförmig ausgebildet. Die Mantelfläche des Verpackungskörpers 12 kann in Abschnitten, in denen sie aufgrund ihrer wendelförmigen Ausbildung mit sich selbst überlappt, insbesondere im Bereich der Randlinie R, sowie im Bereich des umgefalzten Entnahmeendes 12a, vermittels der Außenfolien (18, 22) aus Polymilchsäure (PLA) versiegelt sein (siehe auch Figur 3).

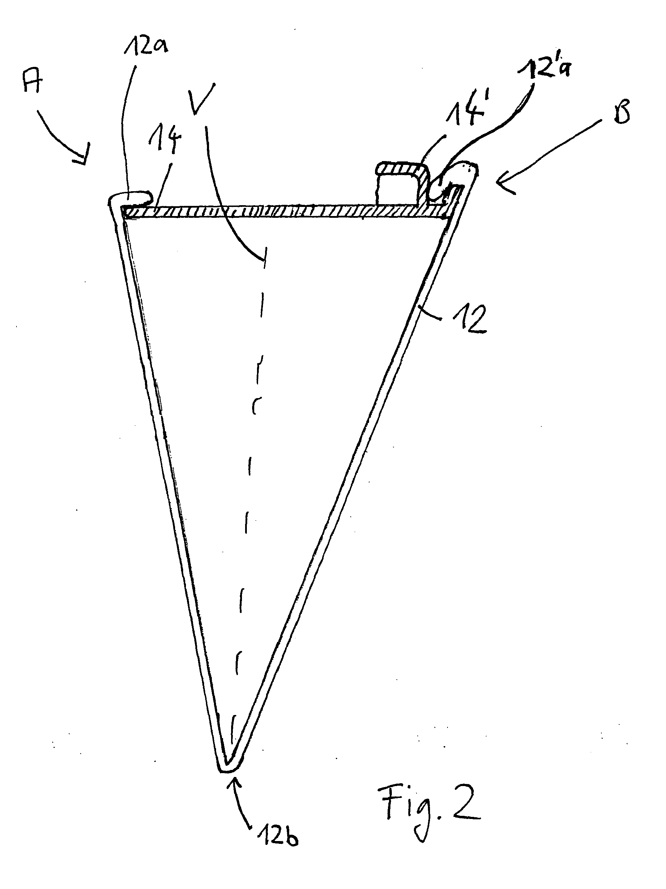

In Figur 2 sind in einer Schnittansicht der ersten Ausführungsform gemäß Figur 1 zwei alternative Anbringungsmöglichkeiten des Deckelabschnitts 14, 14' an dem Verpackungskörper 12 gezeigt. Die im Bereich A dargestellte Situation entspricht der bereits oben unter Bezugnahme auf Figur 1 erläuterten Anbringungsmethode. Alternativ kann, wie in Figur 2 im Bereich B gezeigt, der Deckelabschnitt 14' domartig ausgebildet sein. Auf diese Weise wird durch Rückstellkräfte, die durch das Umfalzen des Entnahmeendes 12a auftreten können, das Entnahmeende 12a' zusätzlich gegen den domartigen Deckelabschnitt 14' gedrückt, wenigstens jedoch formschlüssig an einem unerwünschten selbsttätigen Auffalten gehindert, was eine Fixierung des gesamten Deckelabschnitts 14' im Bereich des Entnahmeendes 12a' zur Folge hat.

In Figur 3 ist ein bevorzugter schichtartiger Aufbau einer Mehrschicht-Struktur 16 des Verpackungskörpers 12 dargestellt. Die Mehrschicht-Struktur 16 kann dabei eine eine Trägerschicht 18 bildende Außenfolie aus Polymilchsäure (PLA) umfassen, die mit einer weiteren Schicht 20 vorzugsweise aus Polyethylenterephtalat (PET), und mit einer weiteren Außenfolie 22, vorzugsweise aus Polymilchsäure (PLA), ein Laminat bildet. Die weitere Schicht 20 kann mit einer Barriereschicht aus Al₂O₃ bedampft sein. Die Schichtdicke der Trägerschicht 18 kann 6 bis 40 Mikrometer, vorzugsweise 30 Mikrometer betragen. Die Schichtdicke der weiteren Schicht (vorzugsweise PET-Schicht) kann ebenfalls etwa 6 bis 40 Mikrometer, vorzugsweise 10 Mikrometer betragen. Die Schichtdicke der weiteren Außenfolie kann bevorzugt wie jene der Trägerschicht 18 etwa 30 Mikrometer betragen.

Sowohl die Trägerschicht 18 als auch die weitere Schicht 20 sowie die weitere Außenfolie 22 können jeweils in eine Vorzugsrichtung gereckt sein. Insbesondere können die Trägerschicht 18, die weitere Schicht 20 und die weitere Außenfolie 22 in der Mehrschicht-Struktur 16 derart angeordnet sein, dass die jeweiligen Vorzugsrichtungen im Wesentlichen gleich gerichtet sind. Auf diese Weise kann das Aufreißverhalten des Verpackungskörpers, insbesondere hinsichtlich des Rißverlaufs, optimiert werden.

## Patentansprüche

1. Verpackung, insbesondere Lebensmittel-Verpackung, umfassend:
einen Deckelabschnitt (14; 14') und einen Verpackungskörper (12);
wobei der Verpackungskörper (12) konisch, insbesondere spitzkonisch, ausgebildet ist, und
wobei der Deckelabschnitt (14; 14') in einem geschlossenen Zustand der Verpackung an dem Verpackungskörper (12) gehalten ist,
**dadurch gekennzeichnet, dass** der Verpackungskörper (12) wenigstens abschnittsweise, vorzugsweise vollständig, transparent ausgebildet ist.

2. Verpackung nach Anspruch 1,
**dadurch gekennzeichnet, dass** der Deckelabschnitt (14; 14') mit dem Verpackungskörper (12) integral zu einer Einheit ausgebildet ist.

3. Verpackung nach Anspruch 1,
**dadurch gekennzeichnet, dass** der Deckelabschnitt (14; 14') gesondert von dem Verpackungskörper (12) ausgebildet ist.

4. Verpackung nach Anspruch 3,
**dadurch gekennzeichnet, dass** der Deckelabschnitt (14; 14') formschlüssig mit dem Verpackungskörper (12) verbunden ist.

5. Verpackung nach einem der vorhergehenden Ansprüche,
**dadurch gekennzeichnet, dass** der Verpackungskörper (12) eine transparente Folie aus einem ersten Kunststoff-Material, insbesondere einem thermoplastischen Kunststoff-Material, umfasst.

6. Verpackung nach Anspruch 5,
**dadurch gekennzeichnet, dass** das erste Kunststoff-Material Polymilchsäure (PLA) ist.

7. Verpackung nach Anspruch 5,
**dadurch gekennzeichnet, dass** das erste Kunststoff-Material ein Polyether, insbesondere Zellulose-Hydrat, ist.

8. Verpackung nach einem der Ansprüche 5 bis 7,
**dadurch gekennzeichnet, dass** die transparente Folie eine Trägerschicht (18) für wenigstens eine weitere Schicht (20, 21, 22), insbesondere für wenigstens eine weitere Folie, bildet.

9. Verpackung nach Anspruch 8,
**dadurch gekennzeichnet, dass** die Trägerschicht (18) und die wenigstens eine weitere Schicht (20, 21, 22) zu einer Mehrschicht-Struktur (16) laminiert sind.

10. Verpackung nach Anspruch 9,
**dadurch gekennzeichnet, dass** die Mehrschicht-Struktur (16) als wenigstens eine weitere Schicht (20) wenigstens eines der folgenden Materialien umfasst:
■ Polymilchsäure (PLA) oder/und Polyethylenterephtalat (PET),
■ Polypropylen, insbesondere biaxial orientiertes Polypropylen (BOPP),
■ Polyvinylidenchlorid (PVDC),
■ Polyethylen (PE),
■ Cyclo-Olefin-Copolymere (COC),
■ Orientiertes Polyamid (OPA).

11. Verpackung nach Anspruch 9 oder 10,
**dadurch gekennzeichnet, dass** die Mehrschicht-Struktur (16) als wenigstens eine weitere Schicht eine Barriereschicht (21) aus wenigstens einem der folgenden Materialien umfasst:
■ Metalloxid wie etwa Al_{X}O_{Y}, insbesondere Al₂O₃, oder/und wie etwa Si_{X}O_{Y}, insbesondere SiO₂, oder/und allgemein ein Oxid eines Metalls der zweiten Hauptgruppe des Periodensystems der Elemente,
■ Ethylen-Vinylalkohol (EVOH),
■ Polyvinylalkohol (PVOH).

12. Verpackung nach Anspruch 11,
**dadurch gekennzeichnet, dass** die Barriereschicht (21) auf eine weitere der Schichten der Mehrschicht-Struktur (16) aufgedampft ist.

13. Verpackung nach einem der Ansprüche 9 bis 12,
**dadurch gekennzeichnet, dass** die Mehrschicht-Struktur (16) an ihren beiden außen liegenden Seiten je eine transparente Außenfolie (18, 22) aus wenigstens einem der folgenden Materialien umfasst:
■ Polymilchsäure (PLA) oder/und Polyethylenterephtalat (PET),
■ Polypropylen, insbesondere biaxial orientiertes Polypropylen (BOPP),
■ Polyvinylchlorid (PVC),
■ Polyether, insbesondere Zellulose-Hydrat.

14. Verpackung nach einem der Ansprüche 8 bis 13,
**dadurch gekennzeichnet, dass** die Trägerschicht einen in eine Vorzugsrichtung gereckten Kunststoff umfasst.

15. Verpackung nach einem der Ansprüche 8 bis 14,
**dadurch gekennzeichnet, dass** wenigstens eine weitere Schicht einen in eine Vorzugsrichtung gereckten Kunststoff umfasst.

16. Verpackung nach Anspruch 15,
**dadurch gekennzeichnet, dass** die Vorzugsrichtung der Trägerschicht und der wenigstens einen weiteren Schicht in der Mehrschicht-Struktur im Wesentlichen gleichgerichtet angeordnet sind.

17. Verpackung nach einem der vorhergehenden Ansprüche,
**dadurch gekennzeichnet, dass** die Verpackung mit einem UV-Schutz versehen ist, welcher Licht im UV-Wellenlängenbereich zumindest abschnittsweise absorbiert oder/und reflektiert.

18. Verpackung nach Anspruch 17, unter Einbeziehung des Anspruchs 5 oder/und des Anspruchs 9,
**dadurch gekennzeichnet, dass** die transparente Folie oder/und wenigstens eine weitere Schicht mit einem UV-Schutz versehen ist, etwa durch Beimischung eines Additivs, beispielsweise aus der Gruppe der Benzotriazole, in die entsprechende Kunststoffmasse.

19. Verpackung nach einem der vorhergehenden Ansprüche,
**dadurch gekennzeichnet, dass** die Randlinie (R) des radial äußeren Randbereichs der Mantelfläche des Verpackungskörpers (12) zumindest abschnittsweise wendelförmig ausgebildet ist.

20. Verpackung nach einem der Ansprüche 8 bis 19, unter Einbeziehung des Anspruchs 8,
**dadurch gekennzeichnet, dass** die Trägerschicht (18), vorzugsweise die beiden transparenten Außenfolien (18, 22) jeweils, eine Dicke von 6 Mikrometern bis 40 Mikrometern aufweist.

21. Verpackung nach einem der Ansprüche 13 bis 20, unter Einbeziehung des Anspruchs 13,
**dadurch gekennzeichnet, dass** die zwischen den beiden Außenfolien (18, 22) gelegenen weiteren Schichten (20, 21) der Mehrschicht-Struktur (16) zusammen eine Dicke von 3 Mikrometern bis 53 Mikrometern, bevorzugt von 6 Mikrometern bis 40 Mikrometern, aufweisen.

22. Verpackung nach einem der vorhergehenden Ansprüche, **dadurch gekennzeichnet, dass** der Deckelabschnitt (14; 14') wenigstens abschnittsweise, vorzugsweise vollständig, aus transparentem Kunststoff, insbesondere aus Polymilchsäure (PLA) und/oder Zellulose-Hydrat, ausgebildet ist.
